# EUROPÄISCHE PATENTSCHRIFT

(11) **EP 1 014 604 B1**
(45) Veröffentlichungstag und Bekanntmachung des Hinweises auf die Patenterteilung: **22.06.2005**
(21) Anmeldenummer: 99116491.4
(22) Anmeldetag: 23.08.1999
(51) Int. Cl.: H04B 10/10, H04B 10/105

(54) **Verfahren und Vorrichtung zur Erzeugung eines Fehlersignals bei kohärentem Überlagerungsempfang von Lichtwellen**
Method and apparatus for producing an error signal in coherent heterodyne reception of lightwaves
Procédé et appareil pour la production d'un signal d'erreur en cas de réception hétérodyne cohérente des ondes lumineuses

(30) Priorität: 22.12.1998 CH 253298
(43) Veröffentlichungstag der Anmeldung: 28.06.2000
(73) Patentinhaber: CONTRAVES SPACE AG, 8052 Zürich (CH)
(72) Erfinder: Pribil, Klaus, Dr., 8152 Glattbrugg (CH); Fischer, Edgar, Dr., 8555 Müllheim Dorf (CH); Meier, Carsten, 8052 Zürich (CH)
(74) Vertreter: OK pat AG

(56) Entgegenhaltungen:
- EP-A- 0 365 028
- EP-A- 0 829 975
- EP-A- 0 831 604
- FR-A- 2 632 075
- FUNG J S C: "A NOVEL ANGULAR DISCRIMINATOR FOR SPATIAL TRACKING IN FREE-SPACE LASER COMMUNICATION" PROCEEDINGS OF THE SPIE, Bd. 1417, 21. Januar 1991 (1991-01-21), Seiten 224-232, XP000614762

## Beschreibung

Die Erfindung bezieht sich auf ein Verfahren und eine Vorrichtung zur Erzeugung eines Fehlersignals bei kohärentem Überlagerungsempfang von Lichtwellen nach dem Oberbegriff des Patentanspruchs **1** bzw. **3**.

Dokument 'A novel angular discriminator for spatial tracking in free-space laser communication', Fung J S C, Proceedings of the SPIE, Bd. 1417, 21 Januar 1991, Seiten 224-232, offenbart ein Verfahren und eine Vorrichtung zur Erzeugung eines Fehlersignals bei kohärentem Überlagerungsempfang von Lichtwellen, derart, dass eine Informationslichtwelle einem Empfangsteleskop zugeführt wird, dass der Informationslichtwelle Licht eines lokalen Lasers überlagert wird, dass die Informationslichtwelle nach der Zumischung des Lichts des lokalen Lasers über einen Strahlteiler in zwei Strahlanteile aufgeteilt wird, dass diese Strahlanteile je einem Detektor zur Erzeugung eines Fehlersignals zugeführt werden, und dass im Fokussierbereich der Empfangseinrichtung eine Scanvorrichtung ("Fast Steering Mirror") wirksam ist.

Zur Kontrolle der optischen Ausrichtung zweier Lichtwellen bei kohärentem Überlagerungsempfang ist aus der europäischen Offenlegungsschrift **EP-0 831 604 A1** eine Vorrichtung mit einem lokalen Laser und mit zwei Detektoren bekannt, die je zwei identische Detektorhälften umfassen, die jeweils durch eine streifenförmige Unterbrechung oder Lücken in der Photodiodenelektrodenfläche zwischen den benachbarten Hälften getrennt sind, wobei die Lücken der zwei Detektoren orthogonal zueinander angeordnet sind. Diese Vorrichtung wird als richtungsselektiver optischer Einmodenempfänger benutzt. Dabei ist sowohl in einem Empfangsteleskop dieser Vorrichtung als auch im Strahlengang des lokalen Lasers eine Abschattung vorhanden. Dies erlaubt, ein Fehlersignal für eine räumliche Strahlregelung eines optischen Überlagerungsempfängers unter weitgehender Vermeidung der systematischen Verluste und unter gleichzeitiger minimaler Beeinträchtigung des zu übertragenden Datensignals mit einem guten Signal-Rausch-Verhältnis zu erzeugen.

Ferner ist aus der europäischen Offenlegungsschrift **EP-0 844 473 A1** eine optische Bank bekannt, deren Bankstruktur derart ausgebildet ist, dass bei einer Wärmedilatation von Armen, die zur Verbindung von Aufnahmeteilen für verschiedene optische Einheiten vorgesehen sind, die Aufnahmeteile ohne Verkippung quer zu Achsen verschiebbar sind, die unter sich und relativ zur Bankstruktur bestimmte Winkellagen einnehmen. Eine solche optische Bank kann mit der eingangs erwähnten Vorrichtung kombiniert werden.

Ein solches "Tracking-Sensor"-Verfahren erlaubt zwar ein gleichzeitiges Kommunizieren und Bestimmen des räumlichen Trackingfehlers, die entsprechende Vorrichtung erweist sich jedoch als nachteilig im Hinblick auf den relativ hohen Justieraufwand bei deren Herstellung.

Es ist daher Aufgabe der Erfindung, ein Verfahren und eine Vorrichtung zur Erzeugung eines Fehlersignals bei kohärentem Überlagerungsempfang von Lichtwellen zu schaffen, die zu einer einfacheren Justierung eines solchen Systems führt.

Diese Aufgabe wird in vorteilhafter Weise erfindungsgemäss durch ein Verfahren und eine Vorrichtung nach Patentanspruch **1** bzw. **3** gelöst.

Das neue Empfangsprinzip, bei dem auf die sogenannte Freistrahlüberlagerung verzichtet wird, bringt nicht nur eine Vereinfachung des Verfahrens zur Optimierung der Justierung, sondern auch eine Vereinfachung des optomechanischen Aufbaus mit sich.

Andere vorteilhafte Ausführungen der Erfindung ergeben sich aus den weiteren abhängigen Ansprüchen.

Die Erfindung wird nachfolgend beispielsweise an Hand einer Zeichnung näher erläutert. Es zeigt:
- **Fig. 1**: eine schematische Darstellung einer erfindungsgemässen Vorrichtung,
- **Fig. 2**: eine schematische Darstellung der Bewegung eines Lichtflecks auf der Stirnfläche einer Lichtwellenfaser,
- **Fig. 3**: ein schematisches Diagramm des zeitlich asymmetrischen Intensitätssignals auf den Detektoren, falls die Faserachse nicht konzentrisch um die optische Achse des optomechanischen Systems scannt, und
- **Fig. 4**: eine schematische Darstellung eines sogenannten Kutter-Teleskops ohne zentrale Abschattung.

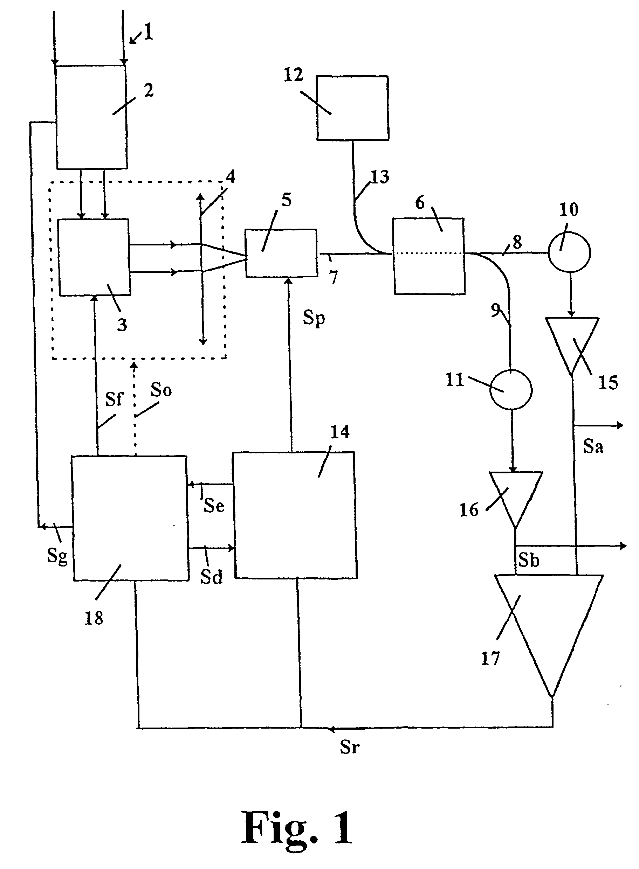

Ähnlich wie bei der aus der erwähnten **EP-0 831 604 A1** bekannten Vorrichtung wird gemäss **Fig. 1** eine ein Datensignal tragende Rx-Welle oder Informationslichtwelle **1** über eine Empfangseinheit bestehend aus einem Empfangsteleskop **2**, einem Feinausrichtmechanismus **3** und einer Linse **4** empfangen und einem Strahlteiler zugeführt.

Im Gegensatz zur erwähnten Vorrichtung weist der Strahlteiler nach der vorliegenden Erfindung einen Fibernutator **5** und einen Lichtwellenleiter-Koppler **6** auf. An den Fibernutator **5** ist ein Ende einer polarisationserhaltenden Monomode-Faser **7** angeschlossen, um die über die optische Empfangseinheit empfangene Strahlung bis zum LWL-Koppler **6** und über weitere Monomode-Fasern **8** und **9** bis zu je einem Detektor **10** bzw. **11** zu führen. Ein solcher Fibernutator ist im wesentlichen eine Ablenkeinheit mit einer Faser, die durch einen Piezomechanismus zur Nutation angetrieben wird. An einen lokalen Laser **12** ist eine weitere vorzugsweise polarisationserhaltende Monomode-Faser **13** angeschlossen, um die vom lokalen Laser **12** erzeugte Strahlung bis zum LWL-Koppler **6** und dann über die Monomode-Fasern **8** und **9** bis zu den zwei Detektoren **10** bzw. **11** zu führen. Die Detektoren **10** und **11** sind nicht wie bei der bekannten Vorrichtung gesplittet. Die Ablenkeinheit **5** kann über einen Bus oder Leitungen Steuersignale **Sp** von einer Aussteuerung **14** erhalten. Der LWL-Koppler **6** ist vorzugsweise ein 50%-zu-50%-Koppler. Ein einfacher und gleichzeitig inhärent langzeitstabiler Aufbau kann mit einem polarisationserhaltenden Faserkoppler erreicht werden.

Als Ablenkeinheit kann auch an Stelle des mechanischen Fibernutators ein elektrooptischer Deflektor verwendet werden, bei dem eine elektrische Spannung einen linearen elektrischen Feldgradienten über die Apertur eines elektrooptischen Kristalls erzeugt. Bei einem solchen Deflektor ist auch eine Apertur von etwa 1 mm ohne weiteres erreichbar.

Die Detektoren **10** und **11** liefern über je einen Verstärker **15** bzw. **16** Signale **Sa** bzw. **Sb,** die als Nutzsignale verwendet werden. Diese Signale **Sa** und **Sb** werden jedoch auch den Differenzeingängen eines Differenzverstärkers **17** zugeführt. Die Vorrichtung umfasst auch einen Regler oder Computer/Regler **18**, der eingangsseitig mit dem Ausgang des Differenzverstärkers **17** verbunden ist und ausgangsseitig mindestens ein Regelsignal **Sd** für die Steuereinheit **14,** die auch Deflektor-Aussteuerung genannt wird, und/oder weitere Regelsignale **Sf** und/oder **So** für die Feinregelung des Feinausrichtmechanismus **3** bzw. für die Bewegung der Linse **4** liefert. Der Regler **18** kann zusätzlich Regelsignale **Sg** für eine Grobregelung des Empfangsteleskops **2** abgeben und gegebenenfalls Rückmeldesignale **Se** von der Steuereinheit **14** erhalten.

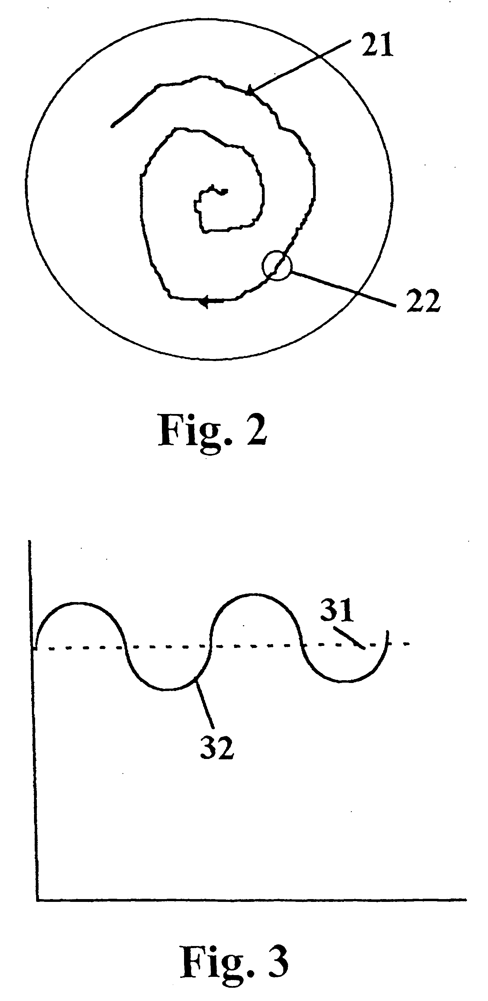

**Fig. 2** zeigt, wie sich ein durch diese geregelte Bewegung **21** geführter Lichtfleck **22** auf eine diametrale Fläche am Ende der Lichtwellenfaser der Ablenkeinheit **5** projiziert. Durch die Regelung wird der Lichtfleck **22** zumindest angenähert bis zum Zentrum der Lichtwellenfaser gebracht.

**Fig. 3** zeigt wie das mittlere Intensitätssignal **31** auf den Detektoren **10** und **11** ein überlagertes Modulationssignal **32** aufweist, wenn die Faserachse nicht konzentrisch um die optische Achse des optomechanischen Systems scannt. Die Aufgabe des Reglers **18** besteht darin, den Feinausrichtemechanismus **3,** das Ende der Faser **7** und/oder die Linse **4,** derart zu bewegen, dass dieses Modulationssignal **32** einen minimalen Wert oder den Wert Null erreicht.

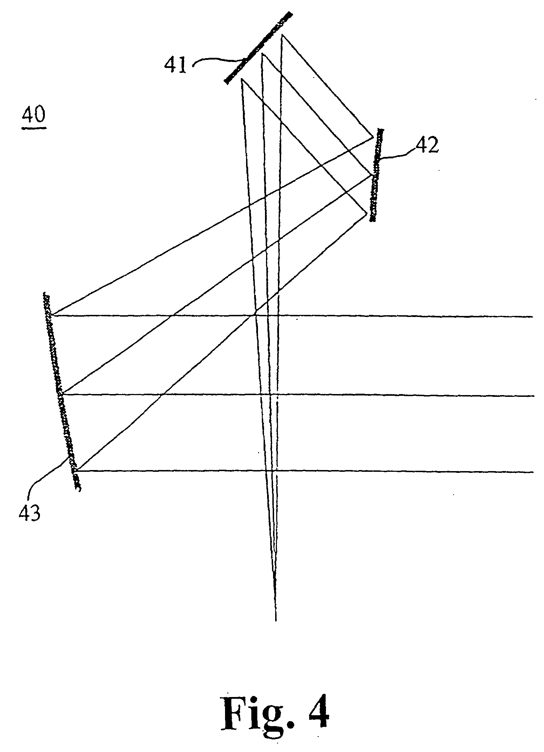

Das in **Fig. 4** dargestellte Kutter-Teleskop **40** weist drei Spiegel **41, 42, 43** auf, die derart angeordnet sind, dass es im Gegensatz zu einem Cassegrain-System keine zentrale Abschattung verursacht, was im Zusammenhang mit der vorliegenden Erfindung auch von Bedeutung ist, um die Energie des absoluten Zentralmaximums eines Beugungsbildes voll auszunutzen, das einem bandbegrenzten Impuls mit cos2 -Spektrum und Nulldurchgängen bei t = iT (i = 1, 2, 3 ... ) ähnlich ist, und um dadurch einen grösseren Wirkungsgrad zu erreichen.

Die erfindungsgemässe Vorrichtung funktioniert folgendermassen:
Die von der optischen Empfangseinheit **2, 3** empfangene Lichtwelle wird über die Feinausrichteinheit **3** und mit Hilfe der Linse **4** etwa auf das Zentrum der Monomode-Faser **7** im Fibernutator **5** fokussiert, wenn die Steuereinheit ruht. Wenn die Steuereinheit **14** aktiv ist, wird durch den Fibernutator **5** eine Bewegung (**Fig. 2**) des Lichtflecks **22** um das Zentrum der Monomode-Faser **7** bewirkt. Vorzugsweise beschreibt der Lichtfleck **22** eine hochfrequente Kreisbewegung um die optische Achse der Empfangsoptik. Obwohl das Ende der Faser **7** durch den Nutator bewegt wird, hat man am Ende der Faser, bei den Detektoren **10** und **11** keine räumliche Bewegung des austretenden Lichts mehr. Vielmehr verursacht die Rotationsbewegung mittels des Nutators **5** eine Intensitätsmodulation (**Fig. 3**) falls die Scanbewegung nicht exakt konzentrisch um den Lichtfleck erfolgt.

Die durch die Ablenkeinheit **5** bewirkte hochfrequente mechanische Scanbewegung des Faserendes kann beispielsweise mittels eines Lateralverschiebemechanismus oder mittels eines Biegeelements gesteuert werden. Schnelle Lateralschiebeeinheiten mit kleinen Bewegungen sind beispielsweise aus optoelektronischen Lesegeräten wie CD-Spielern bekannt. Biegeelemente lassen sich dagegen einfach aus piezokeramischen Röhrchen mit segmentierten Elektroden realisieren. Diese Röhrchen sind nur in einem Bereich fest fixiert, damit sie sich durch den Piezoeffekt in Längsrichtung biegen können. Allen Mechanismen gemeinsam ist, dass sie über sogenannte I-Q-Signale angesteuert werden. Nach erfolgter I-Q-Demodulation des Intensitätssignals erhält man schliesslich den räumlichen Fehler zwischen dem Lichtfleck **22** und der Faserachse. Das Fehlersignal **Sr** bewirkt über den Regler **18**, dass der Ablagefehler minimiert wird.

Der durch die Rotationsbewegung erzeugte relative Versatz zwischen der Intensitätsverteilung des Rx-Lichts in der Fokalebene der Linse **4** und dem Ende der Faser **7** bewirkt somit ein zeitlich asymmetrisches Intensitätssignal auf den Detektoren **10** und **11,** falls die Faserachse nicht konzentrisch um die optische Achse des optomechanischen Systems scannt. Der abtastende Punktdetektor wird somit, und zwar mit sehr guter Näherung, durch das Modenfeld einer monomodigen Faser ersetzt. Um einen zu hohen Signalabfall des in die Faser eingekoppelten Lichts zu vermeiden, sollte der Scanradius 1/10 des Modenfeldradius nicht überschreiten.

Die Lichtwelle wird durch den Strahlteiler in zwei nahezu identische Teilstrahlen aufgeteilt, die je einem der Detektoren **10** und **11** zugeführt werden, nachdem über den LWL-Koppler **6** das Licht des lokalen Lasers **12** in den Lichtstrom eingekoppelt wurde. Von den zwei Detektoren **10, 11,** werden je zwei Fehleranteilsignale erzeugt, die je über einen entsprechenden Front-End-Transimpedanz-Verstärker **15** bzw. **16** in Spannungen **Sa** bzw. **Sb** umgesetzt werden. Aus den Signalen **Sa** und **Sb** wird durch Differenzbildung das räumliche Fehlersignal **Sr** gewonnen, und durch vorzeichengerechte Addition der Fehleranteilsignale **Sa** und **Sb** ergibt sich ein dem ursprünglichen Datensignal entsprechendes Ausgangssignal.

Die Überlagerung der Lokal-Laser-Welle mit der Rx-Welle erfolgt erst in der Glasfaser, so dass der räumliche Korrelationsgrad zwischen Lokal-Laser und Rx-Feld gleich 1 sein wird, das heisst, es erfolgt garantiert streifenfreie Überlagerung. Für die Optimierung bei der Justage bzw. für eine spätere Optimierung im Betrieb kann man dann von einer garantiert streifenfreien Überlagerung ausgehen und auf das absolute Amplitudenmaximum justieren. Dies erweist sich als sehr vorteilhaft gegenüber der Freistrahlüberlagerung, bei der es im Gegensatz zum erfindungsgemässen Verfahren vorkommen kann, dass bei der Überlagerung der beiden Wellen noch Interferenzstreifen infolge eines Kippwinkels auftreten. Der optimale, das heisst streifenfreie Justierzustand kann dann nicht mehr durch das Intensitätsmaximum alleine gefunden werden. Zudem ist dann der Pegelabstand zwischen dem Hauptmaximum und einem der Nebenmaxima relativ klein. Es besteht dann immer die latente Gefahr, dass der Trackingregler aus dem Tritt gerät und auf einem Nebenmaximum der Intensitätsverteilung regelt, was den linearen Regelbereich dann erheblich einschränkt.

Durch die Verwendung der Empfangsfaser **7,** die relativ lang sein kann, ist es möglich, das Receiver-Front-End (RFE), das heisst die Detektoren **10**, **11** und die Verstärker **15**, **16** in einer relativ weiten Entfernung von der Optik unterzubringen. Zu diesem Zweck können die Lichtwellenfasern in einem flexiblen Schutzkabel untergebracht sein oder eine flexible Ummantelung aufweisen. Die im RFE entstehende Wärme ist somit optimal von der Optik abgekoppelt, und es muss nicht mehr mit durch das RFE induzierten thermischen Dejustierungen im optischen Subsystem gerechnet werden. Die optischen Teile **2, 3, 4** und **5** können somit auch in einem relativ grossen Abstand zur Datenelektronik und zum RFE angeordnet werden, die sich in der abgesetzten Elektronik-Einheit befinden. Durch die Beweglichkeit von Teilen der Faser lassen sich somit sämtliche Probleme beseitigen, die sich bei Verwendung von langen Mikrowellenleitungen (Dämpfung, EMC (Electromagnetic Compatibility)) ergeben, auch wenn man dann eine Koaxleitung von der Elektronik-Einheit zum optischen Kopf führen muss, um auf dieser Leitung die niederfrequenten Trackingfehlersignale (BW ≈ 10 kHz) wieder nach vorne zu führen.

Die erfindungsgemässe Vorrichtung erweist sich zudem als besonders vorteilhaft im Hinblick darauf, dass sie eine hohe Langzeitstabilität aufweist, dass sie mit einem relativ einfachen Algorithmus bei der Strahlüberlagerung optimiert werden kann, dass sich bei hochfrequenten Datenströmen (Taktrate = 1000 Mbps) keine besonders signifikante Dämpfung auf die Verbindungsleitung zwischen dem Fibernutator und dem abgesetzten Receiver-Front-End (RFE) (Kabellängen > 3 m) ergibt, dass sie keiner zusätzlichen Leitungs-Treiberelektronik bedarf, dass die Kabel nicht fix verlegt werden müssen, so dass auch bewegliche Teilbereiche möglich sind, dass sie bezüglich EMC-Störungen unproblematisch ist, dass bei Breitbandsystemen RFEs mit Bandbreiten >> 1 Ghz zum Einsatz kommen können, und dass eine hohe Wärmeentwicklung infolge der HF-Elektronik in unmittelbarer Nähe der Optik vermieden wird. In diesem Sinne kann die Vorrichtung nach der vorliegenden Erfindung in vorteilhafter Weise die Elemente **16** und **26** der optischen Bank nach der erwähnten Offenlegungsschrift **EP-0 844 473 A1** ersetzen.

Bei einer Ausführung der Erfindung kann der Regler oder Computer-Regler **18** derart ausgebildet sein, dass eine Bewegung des beweglichen Endes der Lichtwellenfaser **7** um das Zentrum des fokussierten Punktes **22** der Informationswelle **1** bei ruhender Linse **4** bewirkt wird.

Bei einer anderen Ausführung der Erfindung kann der Regler **18** eine Bewegung der Linse **4** bewirken, um den fokussierten Lichtfleck **22** der Informationswelle **1** um das Zentrum der Lichtwellenfaser **7** bei ruhender Lichtwellenfaser zu bewegen.

Bei einer weiteren Ausführung der Erfindung kann eine Kombination beider Bewegungen bewirkt werden.

Die Vorrichtung nach der vorliegenden Erfindung kann für denselben oder ähnliche Zwecke wie bei der erwähnten Patentanmeldung **EP 0 831 604 A1** verwendet werden.

Die oben dargelegten Ausführungsbeispiele sind lediglich zur Veranschaulichung des neuen Verfahrens und der neuen Vorrichtung zu verstehen. Im Rahmen der Ansprüche sind auch andere Ausführungen der Erfindung, wie sie sich für den Fachmann in naheliegende Weise daraus ergeben, möglich.

## Patentansprüche

1. Verfahren zur Erzeugung eines Fehlersignals bei kohärentem Überlagerungsempfang von Lichtwellen, derart,
- dass eine Informationslichtwelle (**1**) einer Empfangseinrichtung (**2**, **3**, **4**, **5**) mit einem Empfangsteleskop zugeführt wird,
- dass der Informationslichtwelle (**1**) Licht eines lokalen Lasers (**12**) überlagert wird,
- dass die Informationslichtwelle (**1**) nach der Zumischung des Lichts des lokalen Lasers (**12**) über einen Strahlteiler (**6**) in zwei Strahlanteile aufgeteilt wird,
- dass diese Strahlanteile je einem Detektor (**10**, **11**) zur Erzeugung des Fehlersignals (**Sr**) zugeführt werden,
- dass die Informationslichtwelle (**1**) und das Licht des lokalen Lasers (**12**) über je eine Lichtwellenfaser (**7** bzw. **13**) zu dem Strahlteiler (**6**) geführt werden,
- dass die Strahlanteile über je eine weitere Lichtwellenfaser (**8**, **9**) zu den Detektoren (**10**, **11**) geführt werden, und
- dass im Fokussierbereich der Empfangseinrichtung (**2**, **3**, **4**, **5**) bei einer Stirnfläche der Lichtwellenfaser (**7**) eine Ablenkeinheit (**5**) wirksam ist,
**dadurch gekennzeichnet, dass**
- ein Ende der Lichtwellenfaser (**7**) durch die Ablenkeinheit (**5**) bewegt wird, wobei
- durch diese Bewegung des Endes dieser Lichtwellenfaser (**7**) bewirkt wird, dass ein Fokusfleck (**22**) der Informationslichtwelle (**1**) auf das Zentrum dieser Lichtwellenfaser (**7**) fokussiert wird, und wobei
- das Fehlersignal (**Sr**) an die Empfangseinrichtung (**2**, **3**, **4**, **5**) rückgekoppelt wird und über einen Regler (**18**) bewirkt, dass Ablagefehler minimiert werden.

2. Verfahren nach Anspruch **1**,
**dadurch gekennzeichnet, dass**
die Informationslichtwelle (**1**) über eine Linse (**4**) auf eine Stirnfläche am Ende einer Lichtwellenfaser (**7**) fokussiert wird.

3. Vorrichtung zur Erzeugung eines Fehlersignal bei kohärentem Überlagerungsempfang von Lichtwellen, die Vorrichtung bestehend aus:
- einer optomechanischen Empfangseinheit (**2, 3, 4**) mit einem Empfangsteleskop (**2**),
- einem lokalen Laser (**12**),
- einem Strahlteiler (**6**), und
- zwei Detektoren (**10, 11**),
wobei die Vorrichtung derart ausgelegt ist, dass
- eine Informationslichtwelle (**1**) mit dem Empfangsteleskop (**2**) empfangen wird,
- der Informationslichtwelle (**1**) Licht des lokalen Lasers (**12**) überlagert wird,
- die Informationslichtwelle (**1**) nach der Zumischung des Lichts des lokalen Lasers (**12**) über den Strahlteiler (**6**) in zwei Strahlanteile aufgeteilt wird, die je einem Detektor (**10,11**) zur Erzeugung des Fehlersignals (**Sr**) zugeführt werden,
wobei die optomechanische Empfangseinheit (**2**, **3**, **4**) gegenüber einer Stirnfläche am Ende einer Lichtwellenfaser (**7**) angeordnet ist, um eine Weiterleitung der empfangenen Informationslichtwelle (**1**) durch die Lichtwellenfaser (**7**) an den Strahlteiles (**6**) zu ermöglichen, der über eine weitere Lichtwellenfaser (**13**) mit dem lokalen Laser (**12**) und über zwei weitere Lichtwellenfasern (**8**, **9**) mit je einem Detektor (**10**, **11**) zur Erzeugung des Fehlersignals (**Sr**) verbunden ist,
**dadurch gekennzeichnet, dass** die Vorrichtung zusätzlich derart ausgelet ist, dass
- die Informationslichtwelle (**1**) und das Licht des lokalen Lasers (**12**) über die Lichtwellenfasem (**7** bzw. **13**) zum Strahlteiler (**6**) geführt werden zur Aufteilung in die zwei Strahlanteile, die dann aufgeteilt über je eine der beiden weiteren Lichtwellenfasem (**8** bzw. **9**) geführt werden, und dass
- das Fehlersignal (**Sr**) an die Empfangsvorrichtung rückgekoppelt wird, damit die empfangene Lichtwelle auf das Zentrum der Lichtwellenfaser (**7**) fokussiert wird.

4. Vorrichtung nach Anspruch **3**,
**dadurch gekennzeichnet, dass**
eine Steuereinheit (**14**) vorhanden ist, die auf diese sich im Fokussierbereich des optischen Empfangssystems befindende Stirnfläche der Lichtwellenfaser (**7**) wirksam ist.

5. Vorrichtung nach Anspruch **3** oder **4**,
**dadurch gekennzeichnet, dass**
ein Regler (**18**) vorhanden ist, um eine Bewegung der Lichtwellenfaser (**7**) um das Zentrum des fokussierten Punktes (**22**) der Informationswelle (**1**) und/oder um eine Bewegung einer Linse (**4**) der optomechanischen Empfangseinheit (**2**, **3**, **4**) derart zu bewirken, dass der fokussierte Punkt (**22**) der Informationswelle (**1**) auf einen zentralen Querschnittbereich der Lichtwellenfaser (**7**) projiziert wird.

6. Vorrichtung nach einem der Ansprüche **3** bis **5**,
**dadurch gekennzeichnet, dass**
mindestens eine dieser Lichtwellenfasern (**7**, **8**, **9**, **13**) eine polarisationserhaltende Monomode-Faser ist.

7. Vorrichtung nach einem der Ansprüche **3** bis **6**,
**dadurch gekennzeichnet, dass**
das Empfangsteleskop (**2**) ohne zentrale Abschattung fokussierbar ist.

8. Vorrichtung nach einem der Ansprüche **3** bis **7**,
**dadurch gekennzeichnet, dass**
die Lichtwellenfasem (**7**, **8**, **9**, **13**) derart dimensioniert und angeordnet sind, dass **dadurch** Mikrowellenleitungen vermieden werden.

9. Vorrichtung nach Ansprüchen **4** und **5**,
**dadurch gekennzeichnet, dass**
die Steuereinheit (**14**) und der Regler (**18**) angeordnet sind, um einen Fibernutator (**5**) oder einen elektrooptischer Deflektor und/oder eine lateral bewegliche Fokussierlinse (**4**) zu bewegen.

## Claims

1. Procedure for generation of an error signal in the case of coherent heterodyne reception of light waves, such that:
- an information light wave (**1**) of a reception device (**2, 3, 4, 5**) is conveyed by a receiving telescope,
- the information light wave (**1**) is combined with the light of a local laser (**12**),
- the information light wave (**1**), after admixture of the light of a local laser (**12**), is divided into two beam portions by a beam splitter (**6**),
- each of these beam portions is fed into a detector (**10, 11**) for generation of an error signal (**Sr**),
- the information light wave (**1**) and the light of the local laser (**12**) are each led along a lightwave fibre (**7** or **13**) to the beam splitter (**6**),
- each of the beam portions is led via a further lightwave fibre (**8, 9**) to the detectors (**10, 11**), and
- in the focusing zone of the reception device (**2, 3, 4, 5**) at a frontal surface of the lightwave fibre (**7**), a deflector unit (**5**) operates,
**characterized in that**
- one end of the lightwave fibre (**7**) is moved by the deflector unit (**5**), so that
- by means of this movement of the end of this lightwave fibre (**7**), a focus spot (**22**) of the information light wave (**1**) is focused on the centre of this lightwave fibre (**7**), and so that
- the error signal (**Sr**) is fed back to the reception device (**2, 3, 4, 5**) and by means of a regulator (**18**) causes the deviation error to be minimized.

2. Procedure according to Claim **1**,
**characterized in that**
the information light wave (**1**) is focused on a frontal surface at the end of a lightwave fibre (**7**) by a lens (**4**).

3. Device for generation of an error signal in the case of coherent heterodyne reception of light waves, the device consisting of:
- an opto-mechanical reception unit (**2, 3, 4**) with a reception telescope (**2**),
- a local laser (**12**),
- a beam splitter (**6**), and
- two detectors (**10, 11**),
the device being so arranged that
- an information light wave (**1**) is received with the reception telescope (**2**),
- the information light wave (**1**) is combined with light from the local laser (**12**),
- the information light wave (**1**), after admixture of the light of a local laser (**12**), is divided by a beam splitter (**6**) into two beam portions, each of which is fed into a detector (**10, 11**) for generation of an error signal (**Sr**), the opto-mechanical reception unit (**2**, **3**, **4**) being arranged opposite a frontal surface at the end of a lightwave fibre (**7**) in order to enable the information light wave (**1**) received to be sent on through the lightwave fibre (**7**) to the beam splitter (**6**) which is connected via another lightwave fibre (**13**) to the local laser (**12**) and via two more lightwave fibres (**8**, **9**) each leading to a detector (**10**, **11**) for generation of an error signal (**Sr**),
**characterized in that** the device is furthermore so arranged that
- the information light wave (**1**) and the light of the local laser (**12**) are led via the lightwave fibres (**7** or **13**) to the beam splitter (**6**) for division into two beam portions, which are then led separately each via one of the two further lightwave fibres (**8, 9**), and
- the error signal (**Sr**) is fed back to the reception device, so that the light wave received is focused on the centre of the lightwave fibre (**7**).

4. Device according to Claim **3**,
**characterized in that**
a control unit (**14**) is present, acting on this frontal surface of the lightwave fibre (**7**) located in the focusing zone of the optical reception system.

5. Device according to Claim **3** or **4**,
**characterized in that**
a regulator (**18**) is present to cause a movement of the lightwave fibre (**7**) about the centre of the focused spot (**22**) of the information light wave (**1**) and/or to cause a movement of a lens (**4**) of the opto-mechanical reception unit (**2, 3, 4**) so that the focus spot (**22**) of the information light wave (**1**) is projected on to a central cross-section zone of the lightwave fibre (**7**).

6. Device according to any one of Claims **3** to **5**,
**characterized in that**
at least one of these lightwave fibres (**7**, **8**, **9**, **13**) is a polarization-conserving single-mode fibre.

7. Device according to any one of Claims **3** to **6**,
**characterized in that**
the reception telescope (**2**) can be focused with no central shadowing effect.

8. Device according to any one of Claims **3** to **7**,
**characterized in that**
the lightwave fibres (**7, 8, 9, 13**) are so dimensioned and arranged that microwave conductors are avoided.

9. Device according to Claims **4** and **5**
**characterized in that**
the control unit (**14**) and the regulator (**18**) are arranged so as to move a fibre nutator (**5**) or an electro-optical deflector and/or a laterally movable focusing lens (**4**).

## Revendications

1. Procédé de génération d'un signal d'erreur avec un récepteur hétérodyne cohérent d'ondes lumineuses, de façon telle que
- une onde lumineuse d'informations (1) est amenée à un dispositif récepteur (2, 3, 4, 5) comportant un télescope récepteur,
- à l'onde lumineuse d'informations (1) est superposée de la lumière d'un laser local (12),
- l'onde lumineuse d'informations (1), après mélange de la lumière du laser local (12), est divisée par un séparateur de faisceau (6) en deux parties de faisceau,
- ces parties de faisceau sont respectivement amenées dans un détecteur (10, 11) pour générer le signal d'erreur,
- l'onde lumineuse d'informations (1) et la lumière du laser local (12) sont guidées par une fibre optique (7 ou 13) vers le séparateur de faisceau,
- les parties de faisceau sont guidées par respectivement une autre fibre optique (8, 9) vers les détecteurs (10, 11), et
- dans la zone de focalisation du dispositif de réception (2, 3, 4, 5), une unité de déflexion (5) agit, avec une face avant de la fibre optique (7),
**caractérisé en ce que**
- une extrémité de la fibre optique (7) est déplacée par l'unité de déflexion (5), où
- par ce déplacement de l'extrémité de la fibre optique (7), on entraîne le fait qu'un spot de focalisation (22) de l'onde lumineuse d'informations (1) est focalisé sur le centre de cette fibre optique (7), et où
- le signal d'erreur (Sr) est couplé en retour à l'unité de réception (2, 3, 4, 5) et entraîne, via un régulateur, le fait que l'erreur d'écart est minimisée.

2. Procédé selon la revendication 1, **caractérisé en ce que** l'onde lumineuse d'informations (1) est focalisée via une lentille (4) sur une surface avant au niveau de l'extrémité d'une fibre optique (7).

3. Dispositif de génération d'un signal d'erreur lors de la réception hétérodyne cohérente d'ondes lumineuses, le dispositif se composant de :
- une unité de réception opto-mécanique (2, 3, 4) comportant un télescope récepteur (2),
- un laser local (12),
- un séparateur de faisceau (6), et
- deux détecteurs (10, 11),
où le dispositif est exécuté de façon telle que
- une onde lumineuse d'informations (1) est reçue avec le télescope récepteur (2),
- l'onde lumineuse d'informations (1) est superposée à la lumière d'un laser local (12),
- l'onde lumineuse d'informations (1), après le mélange de la lumière du laser local (12), est séparée via le séparateur de faisceau (6) en deux parties de faisceau qui sont respectivement amenées vers un détecteur (10, 11) pour générer le signal d'erreur (Sr),
où l'unité de réception opto-mécanique (2, 3, 4) est disposée à l'opposé d'une face avant, au niveau de l'extrémité de la fibre optique (7), pour permettre une transmission de l'onde lumineuse d'informations (1) reçue via la fibre optique (7) vers le séparateur de faisceau (6), qui est relié par une autre fibre optique (13) au laser local (12) et par deux autres fibres optiques (8, 9) à un détecteur (10, 11) respectivement, pour générer un signal d'erreur (Sr),
**caractérisé en ce que** le dispositif est de plus exécuté de façon telle que
- l'onde lumineuse d'informations (1) et l'onde du laser local (12) sont amenées par les fibres optiques (7 ou 13) vers le séparateur de faisceau pour une répartition en deux parties de faisceau, qui sont ensuite amenées séparées respectivement par une des deux autres fibres optiques (8, 9), et que
- le signal d'erreur (Sr) est couplé en retour au niveau du dispositif récepteur pour que l'onde lumineuse reçue soit focalisée sur le centre de la fibre optique (7).

4. Dispositif selon la revendication 3, **caractérisé en ce qu'**il existe une unité de commande (14) qui agit sur cette face avant de la fibre optique (7) se trouvant dans la zone de focalisation du système optique de réception.

5. Dispositif selon la revendication 3 ou 4, **caractérisé en ce qu'**il existe un régulateur (18) permettant de provoquer un déplacement de la fibre optique (7) autour du centre du point focalisé (22) de l'onde d'informations (1) et/ou un déplacement d'une lentille (4) de l'unité de réception opto-mécanique (2, 3, 4) de façon à ce que le point focalisé (22) de l'onde d'informations (1) soit projeté sur une zone de section centrale de la fibre optique (7).

6. Dispositif selon l'une des revendications 3 à 5, **caractérisé en ce qu'**au moins une des fibres optiques (7, 8, 9, 13) est une fibre monomode à maintien de polarisation.

7. Dispositif selon l'une des revendications 3 à 6, **caractérisé en ce que** le télescope récepteur (2) peut être focalisé sans occultation centrale.

8. Dispositif selon l'une des revendications 3 à 7, **caractérisé en ce que** les fibres optiques (7, 8, 9, 13) sont dimensionnées et disposées de façon telle que l'on peut de ce fait éviter des lignes haute fréquence.

9. Dispositif selon les revendications 4 et 5, **caractérisé en ce que** l'unité de commande (14) et le régulateur (18) sont disposés pour déplacer un dispositif de nutation de fibre (5) ou un déflecteur opto-électrique et/ou une lentille de focalisation à déplacement latéral (4).
